# EUROPEAN PATENT APPLICATION

(11) **EP 4 438 499 A1**
(43) Date of publication of application: **02.10.2024**
(21) Application number: 23166064.8
(22) Date of filing: 31.03.2023
(51) Int. Cl.: B64U 70/97, B64U 80/25, B64U 70/95, B64U 80/10, B64U 50/37

(54) **POSITIONING SYSTEM AND STATION ADAPTED TO RECEIVE AND STORE AN UNMANNED AERIAL VEHICLE**

(71) Applicant: Pietrucha International Sp. z o.o., 98-235 Blaszki (PL)
(72) Inventor: Lewandowski, Jaroslaw, 09-130 Baboszewo (PL); Pietrucha, Jerzy, 98-235 Blaszki (PL)
(74) Representative: AOMB Polska Sp. z.o.o.

(57) **Abstract**

The invention pertains to the field of unmanned aircrafts, and more specifically to elements that enable storage, positioning and charging aircrafts upon their landing on the station. The invention discloses a positioning system comprising: a landing platform (1) and a charging arrangement (3). The system is characterized in that it comprises a positioning arrangement (2) capable to position an unmanned aircraft at a dedicated site on the landing platform (1). Positioning arrangement (2) comprises at least three beams (4) to enable positioning of the unmanned aircraft at a dedicated site on the landing platform (1), and guiding mechanisms capable to move the beams (4), where the charging arrangement (3) is attached to one beam (4) and has a connector (6) capable to be connected to the unmanned aircraft, preferably by means of a mechanic-electric connection. The invention also provides a station arranged for receiving and storage of an unmanned aircraft and comprising a positioning system.

## Description

### Field of the invention

The invention pertains to the field of unmanned aircrafts, and more specifically to elements that enable storage, positioning and charging aircrafts upon their landing on a station.

### Prior art

There are known drone charging stations with platforms on which aircrafts are seated. Homing guidance of such crafts is implemented by means of remote control. The path of the flight, the angles, the flight duration time and capturing of images are controlled in real time. On platforms docking stations with a plurality of interfaces are positioned. Platforms are known that form an assembly with a specifically configured unmanned aircraft where charging is effected by contacting the platform with the aircraft. Also stations are used that offer closed and opened cover to protect the aircraft against bad weather conditions.

Existent solutions have no mechanism to facilitate landing of an unmanned aircraft.

### Summary of the invention

It is the aim of this invention to propose a solution to enable automatization of landing of an unmanned aircraft and enhance safety thereof.

The invention discloses a positioning system implemented for automatic positioning of a landing unmanned aircraft on a landing platform, comprising:
a landing platform arranged for receiving and seating the landing unmanned aircraft thereon,
a charging arrangement, arranged for being connected to an unmanned aircraft and for controlling and charging,

characterized in that it comprises a positioning arrangement arranged for seating an unmanned aircraft at a dedicated site on the landing platform,
wherein the positioning system comprises at least three beams to enable seating an unmanned aircraft at a dedicated site on the landing platform, and guiding mechanism arranged for moving the beams,
the charging arrangement being attached to one beam and having a connector capable to be connected to the unmanned aircraft, preferably by means of a mechanical-electric connection.

Preferably, the positioning arrangement has a form of four beams, and preferably pairs of beams are arranged in parallel to each other, more preferably the two pairs of beams are arranged perpendicularly to each other.

In one embodiment, at least one beam is at its two ends attached to guiding mechanisms that are capable to move along a predetermined track, and preferably the guiding mechanism is a carriage moving on a guide.

In one embodiment, the guiding mechanism is releasably connected to a driving belt driven by an electric motor, preferably a stepper motor.

The charging arrangement and/or the connector are mounted pivotably.

Preferably, the charging arrangement is provided with a battery controller configured to control the state of the battery charge of the unmanned aircraft.

In one embodiment, it comprises at least one decoupling element capable to decouple the unmanned aircraft from the charging arrangement, and preferably the decoupling elements are actuators.

The invention provides a station arranged for receiving and storage of an unmanned aircraft characterized in that it comprises a positioning arrangement.

In one of preferable embodiments, it comprises a movable roof and preferably the roof is capable to be slid over the landing platform, and more preferably the roof is comprised of two roofing portions which are capable to be slid over the landing platform from opposite sides.

Preferably, the positioning system is mounted on an elevator which is capable to move vertically and has a t least two fixed positions: the highest one and the lowest one, and preferably it has three positions: the highest one, a safe one, and the lowest one.

In one of preferable embodiments, the elevator comprises a frame configured for mounting a positioning system thereon.

The frame, preferably at each of its corners, comprises a screw, preferably a self-locking screw, more preferably a trapezoidal screw.

Preferably, the screws are connected via a chain which is driven by a motor.

In one of preferable embodiments, under the landing platform a homing guidance is arranged.

In one of preferable embodiments, the homing guidance system comprises an infrared, IR or visible light emitter.

### Advantageous effects of the invention

Thus presented object of the invention enables safe landing of a unmanned aircraft by extending the elevator to its highest position and this considerably facilitates the landing process. Passing of the elevator to lower positions hides the aircraft and makes it possible to close the roof to protect the aircraft against weather conditions and human actions. The invention also enables positioning of an unmanned aircraft on a platform after landing so that its position enables connecting it to a connector and charging.

### Brief description of the drawings

Fig. 1 - discloses a positioning system in an isometric view,
Fig. 2 - discloses a positioning system in a top view,
Fig 3 - discloses a guiding mechanism according to an embodiment,
Fig. 4 - discloses a charging arrangement along with a connector on the landing platform.

### Detailed description of preferable embodiment of the invention

The subject invention will be described below with reference to the drawings.

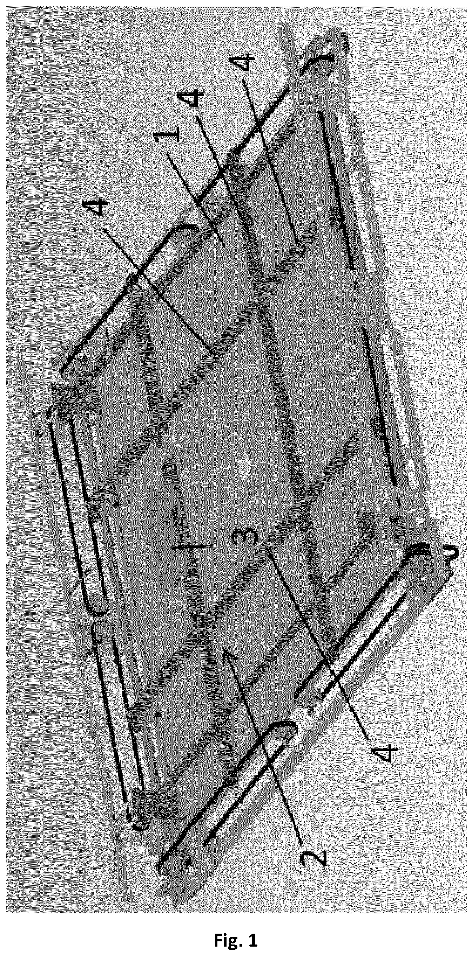

The first invention provides a positioning system intended for positioning a unmanned aircraft landing on a landing platform 1, as seen in Fig. 1. It is applicable in the field of stations, machines, landing grounds which are intended to be used by unmanned aircrafts.

Positioning system comprises a landing platform 1 and a charging arrangement 3. On the landing platform 1 an unmanned aircraft lands and is seated. Upon being seated, the aircraft connects to a charging arrangement 3 and is charged.

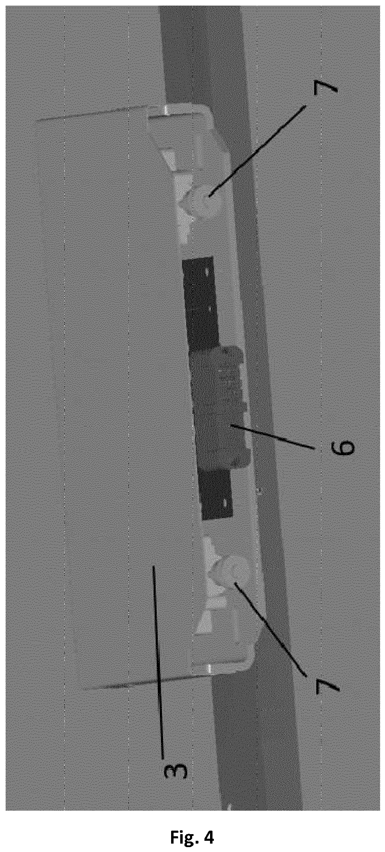

Positioning system comprises a positioning arrangement 2 that seats an unmanned aircraft at a dedicated site on the landing platform 1. The dedicated site is the target sire for seating of the unmanned aircraft, and seating the aircraft at such dedicated site enables the aircraft to be connected to a charging arrangement and to have its batteries recharged. The positioning system comprises, in a preferable embodiment of the invention, at least one decoupling element 7, which causes decoupling of the aircraft from the charging arrangement 3. An embodiment with two decoupling elements 7 embodied as actuators is shown in Fig. 4, and a person skilled in the art will be aware that it is possible to use other actuators than the ones shown in the embodiment, such as mechanic arrangements controlled by an electric motor or electromagnets that interact with magnets or electromagnets.

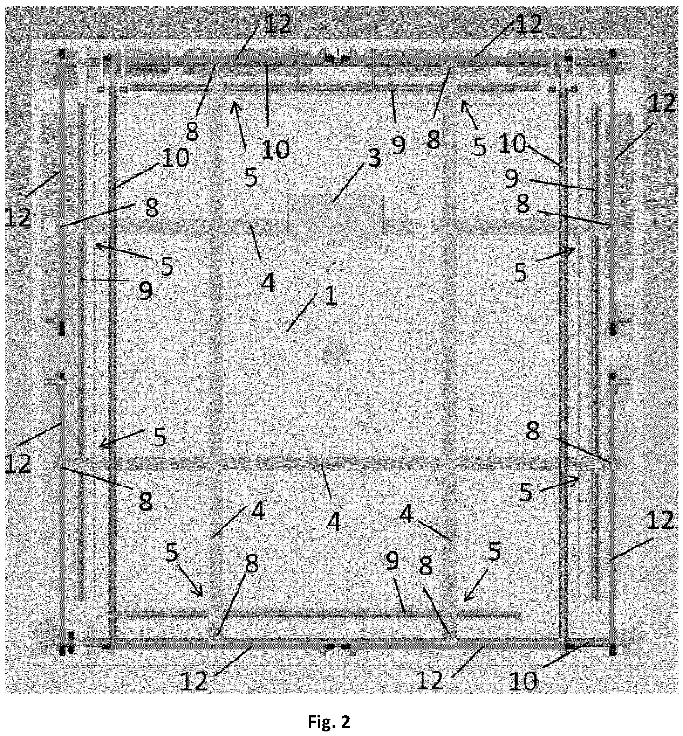

Positioning arrangement 2 comprises at least three beams 4 the movement of which causes seating of an unmanned aircraft at the dedicated site on the landing platform 1. Movement of the beams 4 pushes the aircraft and makes it seat between the beams 4. The beams 4 are connected to guiding mechanisms 5 which make each of the beams 4 move. An embodiment of the positioning arrangement 2 can be seen in Figs. 1 and 2.

In another embodiment, charging arrangement 3 is attached to one beam 4 and comprises a connector 6 to be connected to the unmanned aircraft, preferably via a mechanic-electronic connection. Positioning of the aircraft at the dedicated site by means of the positioning arrangement 2 makes it possible to connect the aircraft to a connector 6 in the charging arrangement 3 arranged on one of the beams 4 of the positioning arrangement 2. In this embodiment the dedicated site is located in the middle of the landing platform 1. Connection 6, in this embodiment, is intended for charging and controlling an unmanned aircraft, and it can be seen in Fig. 4.

It should be emphasized that it is possible to use the connector 6 that provides a stable connection with the use of the connector and it is also possible to use the connector 6 in a form of a contact which will require permanent pressure of the unmanned aircraft. Pressure may be effected by means of the beams 4 or a decoupling element 7 which also enables holding of the unmanned aircraft. In the first case it is preferable to use at least one decoupling element 7 to enable decoupling of the unmanned aircraft from the connector 6 without any action by the operator.

In this embodiment, the charging arrangement 3 is attached on the beam 4 so that the charging arrangement 3 is in the symmetry axis of the dedicated site on the landing platform 1 and it is configured to be connected to the unmanned aircraft, as shown in Fig. 2. It should be noted that in the symmetry axis solely one connector 6 may be present.

The charging arrangement 3, in this embodiment, is mounted pivotably to make the connector 6 self-adjusting. It is also possible to set in self-alignment the connector 6 only. In this embodiment, the decoupling element 7 are actuators which are arranged at both sides of the connector 6 and are intended to decouple the connected unmanned aircraft from the connector 6. Decoupling elements 7 are visible in Fig. 4. Preferably, these are electromagnetic actuators. In this embodiment, the charging arrangement 3 is provided with a battery controller which is configured to control the state of the battery charge of the unmanned aircraft.

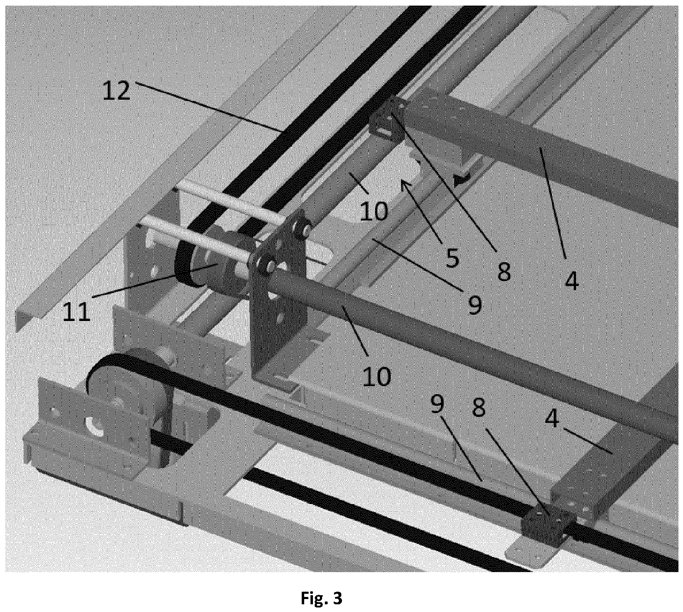

In this embodiment, the positioning arrangement 2 comprises three beams 3 that form a triangle, for example an isosceles triangle, but in other embodiments it may comprise four beams 4 or more. In the case of four beams 4, for each of the two pairs of beams 4, beams 4 are preferably arranged in parallel to each other, and the two pairs of beams 4 are preferably arranged perpendicularly to each other. It should be noted that the beams 4 may form any quadrangle in this embodiment. In an embodiment with four beams 4, they define a quadrangular area, preferably a rectangular area. Each of the beams 4 is attached to guiding mechanisms 5. In this embodiment, at least one beam 4 is at its two ends attached to guiding mechanisms 5 that move along a predetermined track and this causes movement of the beam 4. The guiding mechanisms 5 are shown in Fig. 2 and 3. In this embodiment, the guiding mechanism 5 is a carriage 8, preferably a linear one, moving on a guide 9, preferably a linear one, as shown in Fig. 3.

Guides 9, in this example, are mounted at the extremes of the landing platform 1. In this example, carriages 8 are connected to a driving belt 12 driven by a motor. Preferably, the driving belt 12 is a cogbelt. The driving belt 12 drives the carriages 8 which force the beam 4 to move. The beam 4 at its two ends has carriages 8 which are driven by the driving belts 12 and for the purpose of synchronization of both sides a shaft 10 is provided which is positioned in parallel to the beam 4 being moved. The driving belts 12 of each of the two carriages 8 of the beam 4 are wound around the same shaft 10 around toothed wheels. Motion of the shaft 10 causes simultaneous movement of the driving belts 12 and thus synchronous movement of the beam 4. Movement of the shaft 10 is caused by an additional driving belt 11 wound around a further toothed wheel on the shaft 10 which belt 11 is connected to an electric motor, preferably a stepped motor, as shown in Fig. 3. The stepped motor drives the toothed wheel secured on the shaft 10. In this embodiment, each of the beams 4 of the positioning arrangement has an individual shaft 10 and operation mechanism as described above, along with its own stepped motor. In this embodiment the carriages 8 located at the same end of two different beams 4 parallel to each other have one guide 9 on which they move.

In this embodiment, one pair of beams 4, where the beams 4 are arranged in parallel to each other, operates in a first plane. The other pair of beams 4 operates in a second plane, parallel to the first plane and over the first plane. In this embodiment, the landing platform 1 has a shape of a rectangular prism and is covered with a plate, preferably made of polycarbonate. In other embodiments, the landing platform 1 has a shape of a cube or a circle.

On the entire polycarbonate plate, graphics of the landing area is reflected, exclusively in the middle there is no graphics, since at this location, in this embodiment, under the landing platform 1 a homing guidance system is arranged. Preferably, the homing guidance system is an infrared, IR or visible light emitter. Graphics is absent in this portion to enable facilitated access of the unmanned aircraft to the homing guidance system.

A second object of the invention is a station which is arranged for receiving and storage of an unmanned aircraft. The station comprises the above described aircraft positioning system. In a preferable embodiment, the station also comprises a movable roof which covers the unmanned aircraft and protects it against atmospheric conditions and mechanical interactions. In a preferable variant, the roof moves slidably so that in a first extreme position it exposes the landing platform 1, while in a second extreme position it covers the landing platform 1. It should be noted that the roof may be comprised of two roofing portions and the two roofing portions slide away in an opposite directions. In an embodiment of the station with a roof, preferably, the station has side walls which along with the roof and the base of the station define an enclosed space for the unmanned aircraft.

In an embodiment, the positioning system is mounted on an elevator which is capable to move vertically and has at least two fixed positions: the highest one and the lowest one, and preferably it has three positions: the highest one, a safe one, and the lowest one. In this example, the range of movement of the elevator is 60 cm.

At the highest position, the elevator is extended to its maximum height which enables safe landing of an aircraft on the landing platform 1. Closing with the movable roof is possible at two positions: the safe one and the lowest one. At the safe position, about 20 cm below the highest position, it is to possible to close the movable roof, when no unmanned aircraft is present in the station. The lowest position enables closing of the station with the movable roof with the aircraft therein.

It should be noted that the elevator may be present in a station that is not equipped with a positioning arrangement comprising beams 4 or a charging arrangement 3, and it may comprise the remaining solutions described earlier. In such a case the elevator enables raising of the landing platform 1 to the highest position and this facilitates landing of the unmanned aircraft, and after the landing the station enables lowering of the unmanned aircraft and closing of the roof.

In this embodiment, the elevator comprises a frame configured for mounting of a positioning arrangement thereon, wherein the frame has at each of its corners a screw, preferably a self-locking screw, more preferably a trapezoidal screw. In this example, all the screws are positioned at the bottom, from below the frame, and are coupled with a chain which is driven, via gear transmissions, by a motor. In this example, at the ends of the screws there are bearings thanks to which the movement of the elevator is effected vertically. In this example, all the screws are synchronized together. On the frame the landing platform 1 is mounted being a part of the positioning system. Unmanned aircraft is homing guided by GPS and lands on the landing platform 1 so that the landing gear of the aircraft, cooperating with the charging arrangement 3, is oriented towards it. Landing of the aircraft is facilitated because the elevator is extended to its highest position and so the landing platform 1. At this point the beams 4 of the positioning arrangement 2 are located at the extremity of the landing platform 1. Upon landing the aircraft transmits radio frequency waves to the system to inform it that the station may receive it. In this example, communication is effected by means of LTE. The unmanned aircraft and the station have pre-installed GPS network communication and they communicate with an external system via LTE. The first move is performed by the beam 4 with the attached charging arrangement 3 and it moves by about 30 cm and then returns to the extremity of the landing platform 1. This initial movement moves the aircraft if the aircraft landed too close to the charging arrangement 3. Movement of the aircraft may cause damage to the charging arrangement 3 positioned too close. In this case the positioning arrangement has four beams 4. Then movement is performed by two beams 4 which are perpendicular to the beam 4, to the charging arrangement 3. Both beams 4 move simultaneously and they locate the unmanned aircraft in the axis of the dedicated site and the charging arrangement 3. Then movement is made by the beam 4 with the charging arrangement and the fourth beam 4 which is parallel thereto. Movement of the two beams 4 is effected at the same time and causes forcing of the unmanned aircraft to the connector 6. The connector 6 becomes coupled and transmits a signal that it is connected.

The landing gear of the unmanned aircraft has small bearings from below due to which it slides smoothly on the landing platform 1 and at its four corners it has four stops that are pushed by the beams 4. Upon seating the aircraft at its dedicated site - at the point when all the beams 4 are abutting the aircraft, in the example with four beams 4, the stops contact the beams 4 at the corners where the beams 4 cross. The landing gear is securely connected to the aircraft and it has a predetermined location for a connector which is to be connected to the connector 6 of the positioning system and a predetermined location where the decoupling elements 7 are abutted.

Decoupling of the unmanned aircraft begins with retracting the beam 4 parallel to the beam 4 with the charging arrangement 3 to a distance of about 3 cm. Then actuators are activated to force the aircraft out of the connector 6. The first beam 4 moved away provides locking movement of the aircraft resulting from decoupling. Upon decoupling the connector 6, all the beams 4 ride away to the extremity of the landing platform 1.

## Claims

1. A positioning system applicable for automatic positioning of a landing unmanned aircraft on a landing platform (1), comprising:
a landing platform (1), arranged for receiving and seating the landing unmanned aircraft thereon,
a charging arrangement (3), capable to be connected to the unmanned aircraft as well
as for controlling and charging,
**characterized in that** it comprises a positioning arrangement (2) arranged for seating the unmanned aircraft at a dedicated site on the landing platform (1),
wherein the positioning arrangement (2) comprises at least three beams (4) to enable seating of the unmanned aircraft at the dedicated site on the landing platform (1), and guiding mechanisms (5) capable to move the beams (4),
the charging arrangement (3) being attached to one beam (4) and having a connector (6) which is capable to be connected to the unmanned aircraft, preferably via a mechanic-electric connection.

2. The positioning system according to claim 1 **characterized in that** the positioning arrangement (2) has a form of four beams (4), and preferably pairs of beams (4) are arranged in parallel to each other, and more preferably the two pairs of beams (4) are arranged perpendicularly to each other.

3. The positioning system according to claim 1 or 2 **characterized in that** at least one beam (4) is at its two ends attached to guiding mechanisms (5) which are capable to move along a predetermined track, and preferably the guiding mechanism (5) is a carriage (8) that moves on a guide (9).

4. The positioning system according to claim 3 **characterized in that** the guiding mechanism (5) is releasably connected to a driving belt (12) driven by an electric motor, preferably a stepped motor.

5. The positioning system according to any one of the preceding claims **characterized in that** the charging arrangement (3) and/or the connector (6) is mounted pivotably.

6. The positioning system according to any one of the preceding claims **characterized in that** the charging arrangement (3) is provided with a battery controller configured to control the state of the battery charge of the unmanned aircraft.

7. The positioning system according to any one of the preceding claims **characterized in that** it comprises at least one decoupling element (7) arranged for decoupling of the unmanned aircraft from the charging arrangement (3), wherein preferably the decoupling elements (7) are actuators.

8. A station arranged for receiving and storage of an unmanned aircraft, **characterized in that** it comprises a positioning system according to any one of claims 1-7.

9. The station according to claim 8 **characterized in that** it comprises a movable roof, wherein preferably the roof is capable to move over the landing station (1), and more preferably the roof is comprised of two roofing portions which are capable to slide over the landing platform (1) from opposite sides.

10. The station according to claim 8 or 9 **characterized in that** the positioning arrangement is mounted on an elevator which is capable to move vertically and has at least two fixed positions: the highest one and the lowest one, and preferably it has three positions: the highest one, a safe one and the lowest one.

11. The station according to any one of claims 8-10 **characterized in that** the elevator comprises a frame configured for mounting of the positioning arrangement thereon.

12. The station according to claim 11 **characterized in that** the frame, preferably at each of its corners, comprises a screw, preferably a self-locking screw, more preferably a trapezoidal screw.

13. The station according to claim 12 **characterized in that** the screws are coupled with a chain which is driven by a motor.

14. The station according to any one of claims 10-13 **characterized in that** under the landing platform (1) a homing guidance system is arranged.

15. The station according to any one of the preceding claims **characterized in that** the homing guidance system comprises an infrared, IR or visible light emitter.
